# EUROPEAN PATENT SPECIFICATION

(11) **EP 3 858 579 B1**
(45) Date of publication and mention of the grant of the patent: **21.12.2022**
(21) Application number: 21154180.0
(22) Date of filing: 29.01.2021
(51) Int. Cl.: B29C 45/76

(54) **INJECTION MOLDING MACHINE**
SPRITZGIESSMASCHINE
MACHINE DE MOULAGE À INJECTION

(30) Priority: 31.01.2020 JP 2020015508
(43) Date of publication of application: 04.08.2021
(73) Proprietor: Sumitomo Heavy Industries, Ltd., Tokyo 141-6025 (JP)
(72) Inventor: YOTSUYANAGI, Chimaki, Chiba-shi, Chiba 263-0001 (JP); TANIDA, Kazuki, Chiba-shi, Chiba 263-0001 (JP)
(74) Representative: Louis Pöhlau Lohrentz

(56) References cited:
- DE-A1-102015 005 398
- US-A- 5 470 218
- US-A1- 2004 088 066
- US-A1- 2015 331 399
- US-B2- 10 466 893

## Description

### BACKGROUND OF THE INVENTION

### Field of the Invention

The present invention relates to an injection molding machine.

### Description of Related Art

An injection molding machine of Japanese Unexamined Patent Publication No. 2015-98136 sets a molding condition using a touch panel. The touch panel displays an operation screen and a support screen side by side at the same time. The operation screen includes a setting item to which a set value of the molding condition is input. When a worker touches and selects the setting item, the selected setting item is in an input waiting state. In this state, the worker inputs a number or a character which is a new set value into the setting item, and thus, the setting item is corrected. Meanwhile, the support screen includes a designation unit which designates the setting items of the operation screen. When the worker touches and selects the designation unit, the operation screen having the setting item designated by the selected designation unit is displayed on the touch panel. United States Patent No. 10, 466, 893 discloses a touch screen operator control panel for controlling one or more movements of an injection press. United States Patent Publication No. 2015-331399 discloses a method and a device which allow the secure, intentional and as far as possible error-free initiation of different and directly executable industrial functions. United States Patent Publication No. 2004-088066 discloses a control device for an industrial machine that enhances the security of setting an operating condition.

### SUMMARY OF THE INVENTION

An injection molding machine includes a touch panel. The touch panel displays a screen. The screen has an operation unit on which a touch operation of an object such as a finger is executed.

When the setting item of Japanese Unexamined Patent Publication No. 2015-98136 is touched, the setting item is in the input waiting state. Further, when the designation unit of Japanese Unexamined Patent Publication No. 2015-98136 is touched, an operation screen having a setting item designated in advance is displayed.

In the related art, as in Japanese Unexamined Patent Publication No. 2015-98136, when one operation unit is touched, one operation is executed. Therefore, the number of operation units disposed on the screen of the touch panel increases, and thus, it is complicated to find a target operation unit.

An aspect of the present invention provides a technique capable of reducing the number of operation units disposed on a screen of a touch panel of an injection molding machine.

According to an aspect of the present invention, there is provided an injection molding machine including: a touch panel which includes an operation unit, on which a touch operation of an object is executed, in a screen; and a controller configured to execute an operation of an injection molding machine based on the touch operation on the operation unit, in which the controller includes an identification unit configured to identify a first touch operation and a second touch operation different from each other for one operation unit, and an execution unit configured to execute a first operation of the injection molding machine when the identification unit identifies the first touch operation and execute a second operation different from the first operation when the identification unit identifies the second touch operation, the touch operation of the object includes an operation of sliding the object, a sliding direction of the object is different between the first touch operation and the second touch operation, the screen of the touch panel includes a posting unit configured to post a content of an operation executed by a sliding operation of the object in each direction in which the object slides, next to the operation unit, and the posting unit is displayed on the screen when the object touches the operation unit, and the posting unit is not displayed on the screen when the object does not touch the operation unit.

According to the aspect of the present invention, the number of operation units disposed on the screen of the touch panel of the injection molding machine can be reduced.

### BRIEF DESCRIPTION OF THE DRAWINGS

Fig. 1 is a view showing a state when mold opening of an injection molding machine according an embodiment is completed.
Fig. 2 is a view showing a state when a mold of the injection molding machine according to the embodiment is clamped.
Fig. 3 is a diagram showing a touch panel of the injection molding machine according to the embodiment.
Fig. 4 is a functional block diagram showing components of a controller of Fig. 1.
Fig. 5(A) is a diagram showing a screen when an object is not touched on the operation unit, Fig. 5 (B) is a diagram showing the screen when the object is touched on the operation unit, Fig. 5(C) is a diagram showing the screen when the object is slid downward from a reference point.
Fig. 6(A) is a diagram showing the screen when a symbol is not drawn on the operation unit, Fig. 6 (B) is a diagram showing the screen when the symbol is drawn on the operation unit, Fig. 6(C) is a diagram showing the screen when the drawn symbol is confirmed.

### DETAILED DESCRIPTION OF THE INVENTION

Hereinafter, embodiments of the present invention are described with reference to the drawings. In each drawing, the same or corresponding reference numerals are assigned to the same or corresponding configurations, and descriptions thereof are omitted.

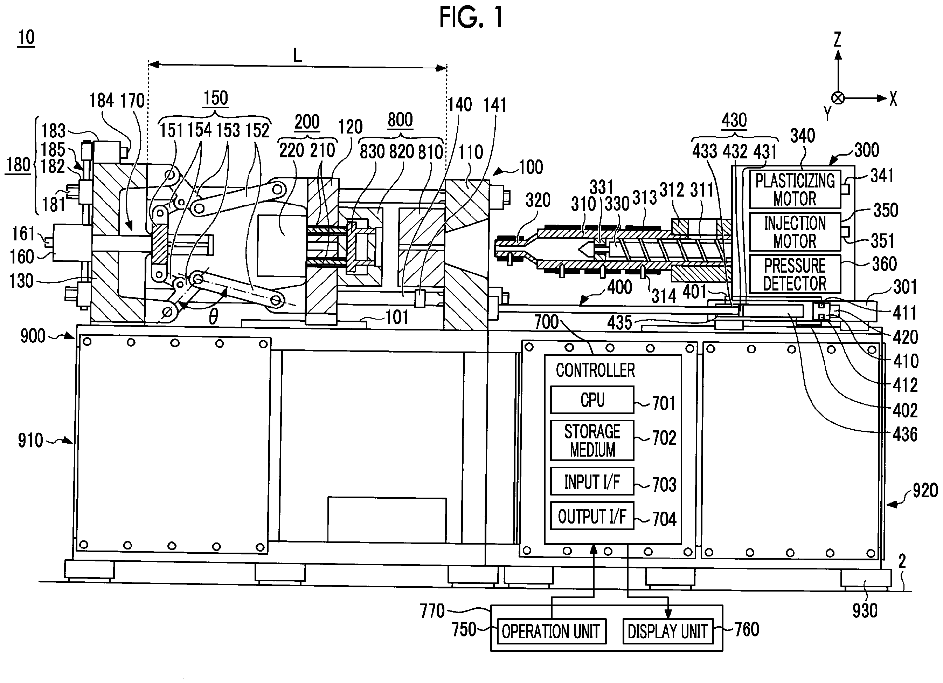

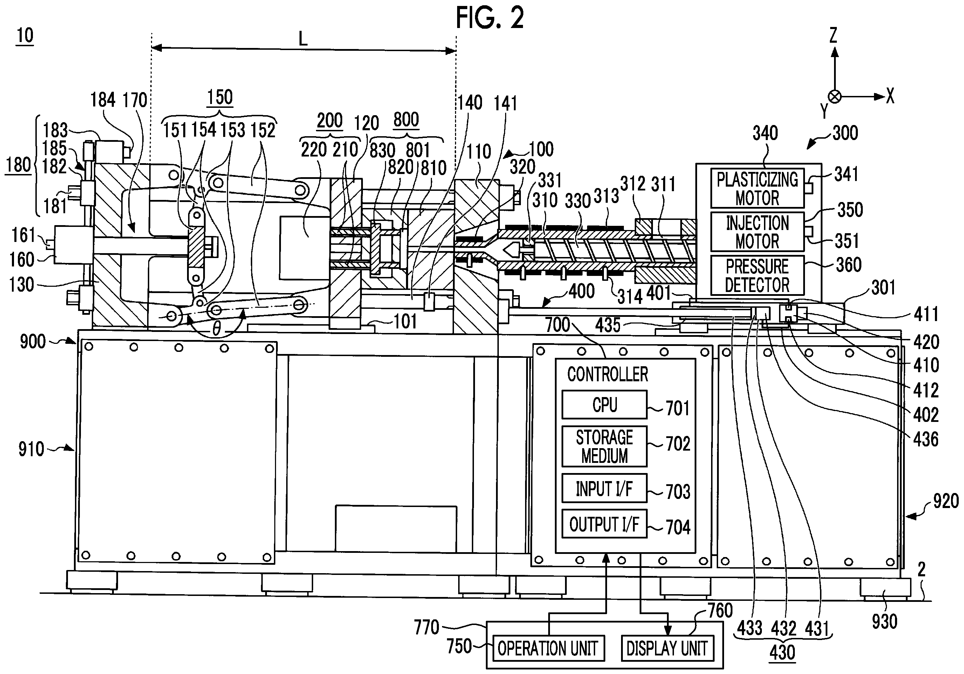

Fig. 1 is a view showing a state when mold opening of an injection molding machine according an embodiment is completed. Fig. 2 is a view showing a state when a mold of the injection molding machine according to the embodiment is clamped. In the present specification, an X-axis direction, a Y-axis direction, and a Z-axis direction are directions perpendicular to each other. The X-axis direction and the Y-axis direction indicate a horizontal direction, and the Z-axis direction indicates a vertical direction. In a case where a mold clamping unit 100 is a horizontal type mold clamping unit, the X-axis direction is mold opening and closing directions, and the Y-axis direction is a width direction of an injection molding machine 10. A negative side in the Y-axis direction is referred to as an operation side, and a positive side in the Y-axis direction is referred to as a counter operation side.

As shown in Figs. 1 to 2, the injection molding machine 10 includes the mold clamping unit 100 which openings or closes a mold unit 800, an ejector unit 200 which ejects a molding product molded by the mold unit 800, an injection unit 300 which injects a molding material into the mold unit 800, a moving unit 400 which moves the injection unit 300 forward or rearward with respect to the mold unit 800, a controller 700 which controls each component of the injection molding machine 10, and a frame 900 which supports each component of the injection molding machine 10. The frame 900 includes a mold clamping unit frame 910 which supports the mold clamping unit 100 and an injection unit frame 920 which supports the injection unit 300. The mold clamping unit frame 910 and the injection unit frame 920 are installed on a floor 2 via a leveling adjuster 930, respectively. The controller 700 is disposed in an internal space of the injection unit frame 920. Hereinafter, each component of the injection molding machine 10 will be described.

### (Mold Clamping Unit)

In descriptions of the mold clamping unit 100, a movement direction (for example, X-axis positive direction) of a movable platen 120 when a mold is closed is defined as a front side, and a movement direction (for example, X-axis negative direction) of the movable platen 120 when the mold is opened is defined as a rear side.

The mold clamping unit 100 performs mold closing, pressurization, mold clamping, depressurization, and mold opening of the mold unit 800. The mold unit 800 includes a stationary mold 810 and a movable mold 820.

For example, the mold clamping unit 100 is a horizontal type clamping unit and the mold opening and closing directions are the horizontal direction. The mold clamping unit 100 includes a stationary platen 110 to which the stationary mold 810 is attached, a movable platen 120 to which the movable mold 820 is attached, a toggle support 130 which is disposed with a gap from the stationary platen 110, a tie bar 140 which connects the stationary platen 110 and the toggle support 130 to each other, a toggle mechanism 150 which moves the movable platen 120 with respect to the toggle support 130 in the mold opening and closing directions, a mold clamping motor 160 which operates the toggle mechanism 150, a motion conversion mechanism 170 which converts a rotary motion of the mold clamping motor 160 into a linear motion, and a mold space adjustment mechanism 180 which adjusts a gap between the stationary platen 110 and the toggle support 130.

The stationary platen 110 is fixed to the mold clamping unit frame 910. The stationary mold 810 is attached to a surface of the stationary platen 110 facing the movable platen 120.

The movable platen 120 is disposed to be movable in the mold opening and closing directions with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus, mold closing, pressurization, mold clamping, depressurization, and mold opening of the mold unit 800 are performed.

The toggle support 130 is disposed so as to be separated from the stationary platen 110, and is placed on the mold clamping unit frame 910 to be movable in mold opening and closing directions. In addition, the toggle support 130 may be movably disposed along a guide which is placed on the mold clamping unit frame 910. The guide of the toggle support 130 may be also used as the guide 101 of the movable platen 120.

In addition, in the present embodiment, the stationary platen 110 is fixed to the mold clamping unit frame 910, and the toggle support 130 is movably disposed in the mold opening and closing directions with respect to the mold clamping unit frame 910. However, the toggle support 130 may be fixed to the mold clamping unit frame 910, and the stationary platen 110 may be movably disposed in the mold opening and closing directions with respect to the mold clamping unit frame 910.

The stationary platen 110 and the toggle support 130 are connected to each other with a gap L therebetween in the mold opening and closing directions by the tie bar 140. A plurality of (for example, four) tie bars 140 may be used. The plurality of tie bars 140 are disposed to be parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151 which moves in the mold opening and closing directions, and a pair of links which is bent and stretched by the movement of the crosshead 151. Each of the pair of link groups includes a first link 152 and a second link 153 which are bendably/strechably connected to each other by pins or the like. The first link 152 is oscillatingly attached to the movable platen 120 with a pin or the like. The second link 153 is oscillatingly attached to the toggle support 130 with a pin or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be coupled to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft and a screw nut which is screwed to the screw shaft. A ball or a roller may be interposed between the screw shaft and the screw nut.

The mold clamping unit 100 performs a mold closing process, a pressurization process, a mold clamping process, a depressurization process, a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 touches the stationary mold 810. For example, a position or movement speed of the crosshead 151 is detected using a mold clamping motor encoder 161 or the like. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressurization process, the mold clamping motor 160 is further driven to further move the crosshead 151 forward from the mold closing completion position to a mold clamping position, and thus, a mold clamping force is generated.

In the mold clamping process, the mold clamping motor 160 is driven to maintain the position of the crosshead 151 at the mold clamping position. In the mold clamping process, the mold clamping force generated in the pressurization process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained.

The number of cavity spaces 801 may be one or more. When a plurality of cavity spaces 801 are provided, a plurality of molding products can be obtained at the same time. An insert material may be disposed in a portion of the cavity space 801 and the other portion of the cavity space 801 may be filled with the molding material. A molding product in which the insert material and the molding material are integrated with each other can be obtained.

In the depressurization process, the mold clamping motor 160 is driven to move the crosshead 151 rearward from the mold clamping position to a mold opening start position, and thus, the movable platen 120 moves rearward, and the mold clamping force is decreased. The mold opening start position and the mold closing completion position may be the same as each other.

In the mold opening process, the mold clamping motor 160 is driven to move the crosshead 151 rearward from the mold opening start position to a mold opening completion position at the set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressurization process, and the mold clamping process are collectively set as a series of setting conditions. For example, a movement speed or positions (including mold closing start position, movement speed switching position, mold closing completion position, and mold clamping position) of the crosshead 151 and the mold clamping force in the mold closing process and the pressurization process are collectively set as a series of setting conditions. The mold closing start position, the movement speed switching position, the mold closing completion position, and the mold clamping position are disposed in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (mold opening start position, movement speed switching position, and mold opening completion position) of the crosshead 151 in the depressurization process and the mold opening process are collectively set as a series of setting conditions. The mold opening start position, the movement speed switching position, and the mold opening completion position are disposed in this order from the front side to the rear side and indicate start points and end points of sections where the movement speed is set. The movement speed is set for each section. The movement speed switching position may be one or more. The movement speed switching position may not be set. The mold opening start position may be the same as the mold closing completion position. In addition, the mold opening completion position and the mold closing start position may be the same as each other.

In addition, instead of the movement speed, the positions, or the like of the crosshead 151, a movement speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 touches the stationary mold 810 becomes a predetermined angle.

The mold clamping unit 100 has a mold space adjustment mechanism 180. The mold space adjustment mechanism 180 performs the mold space adjustment by adjusting the gap L between the stationary platen 110 and the toggle support 130. Moreover, for example, a timing for adjusting the mold space is performed from an end of a molding cycle to a start of a next molding cycle. For example, the mold space adjustment mechanism 180 includes a screw shaft 181 which is formed on a rear end portion of the tie bar 140, a screw nut 182 which is rotatably held to be unable to move forward or rearward by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a central portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. As a result, the position of the toggle support 130 with respect to the tie bar 140 is adjusted, and the gap L between the stationary platen 110 and the toggle support 130 is adjusted. In addition, a plurality of mold space adjustment mechanisms may be used in combination.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (for example, X-axis positive direction) of the movable platen 120 when the mold is closed is defined as the front side, and the movement direction (for example, X-axis negative direction) of the movable platen 120 when the mold is opened is defined as the rear side.

The ejector unit 200 is attached to the movable platen 120 and moves forward or rearward together with the movable platen 120. The ejector unit 200 includes an ejector rod 210 which ejects the molding product from the mold unit 800, and a drive mechanism 220 which moves the ejector rod 210 in a movement direction (X-axis direction) of the movable platen 120.

The ejector rod 210 is disposed to be movable forward or rearward through a through-hole of the movable platen 120. A front end portion of the ejector rod 210 comes into contact with a movable member 830 which is disposed to be movable forward or rearward inside the movable mold 820. The front end portion of the ejector rod 210 may be connected to the movable member 830 or may not be connected to the movable member 830.

For example, the drive mechanism 220 includes an ejector motor and a motion conversion mechanism that converts a rotary motion of the ejector motor into a linear motion of the ejector rod 210. The motion conversion mechanism includes a screw shaft and a screw nut which is screwed to the screw shaft. A ball or a roller may be interposed between the screw shaft and the screw nut.

The ejector unit 200 performs an ejection process under the control of the controller 700. In the ejection process, the ejector rod 210 is moved forward from a standby position to an ejection position at a set movement speed, and thus, the movable member 830 moves forward and the molding product is ejected. Thereafter, the ejector motor is driven to move the ejector rod 210 rearward at a set movement speed, and thus, the movable member 830 moves rearward to an original standby position.

For example, a position or movement speed of the ejector rod 210 is detected using an ejector motor encoder. The ejector motor encoder detects the rotation of the ejector motor and sends a signal indicating a detection result to the controller 700. In addition, an ejector rod position detector which detects the position of the ejector rod 210 and an ejector rod movement speed detector which detects the movement speed of the ejector rod 210 are not limited to the ejector motor encoder, and a general detector can be used.

### (Injection Unit)

Unlike the descriptions of the mold clamping unit 100 or the descriptions of the ejector unit 200, in descriptions of the injection unit 300, a movement direction (for example, X-axis negative direction) of a screw 330 during filling is referred to as a front side, and a movement direction (for example, X-axis positive direction) of the screw 330 during plasticizing is referred to as a rear side.

The injection unit 300 is installed on a slide base 301, and the slide base 301 is disposed so as to be movable forward or rearward with respect to the injection unit frame 920. The injection unit 300 is disposed to be movable forward or rearward with respect to the mold unit 800. The injection unit 300 touches the mold unit 800, and the cavity space 801 inside the mold unit 800 is filled with the molding material by the injection unit 300. For example, the injection unit 300 has a cylinder 310 which heats the molding material, a nozzle 320 which is provided on a front end portion of the cylinder 310, a screw 330 which is disposed to be movable forward or rearward and rotatable in the cylinder 310, a plasticizing motor 340 which rotates the screw 330, an injection motor 350 which moves the screw 330 forward or rearward, and a pressure detector 360 which detects a force transmitted between the injection motor 350 and the screw 330.

The cylinder 310 heats the molding material which is supplied from a feed port 311 to the inner portion of the cylinder 310. For example, the molding material includes a resin or the like. For example, the molding material is formed into pellets and is supplied to the feed port 311 in a solid state. The feed port 311 is formed in a rear portion of the cylinder 310. A cooler 312 such as a water cooling cylinder is provided on an outer periphery of the rear portion of the cylinder 310. A heating unit 313 such as a band heater and a temperature measurer 314 are provided on an outer periphery of the cylinder 310 on a front side of the cooler 312.

The cylinder 310 is divided into a plurality of zones in an axial direction (for example, X-axis direction) of the cylinder 310. The heating unit 313 and the temperature measurer 314 are provided in each of the plurality of zones. A set temperature is set in each of the plurality of zones, and the controller 700 controls the heating unit 313 so that a temperature measured by the temperature measurer 314 becomes the set temperature.

The nozzle 320 is provided on a front end portion of the cylinder 310 and is pressed against the mold unit 800. The heating unit 313 and the temperature measurer 314 are provided on an outer periphery of the nozzle 320. The controller 700 controls the heating unit 313 such that a measured temperature of the nozzle 320 becomes a set temperature.

The screw 330 is disposed in the cylinder 310 so as to be rotatable and movable forward or rearward. When the screw 330 rotates, the molding material is fed forward along helical grooves of the screw 330. The molding material is gradually melted by heat from the cylinder 310 while being fed forward. The liquid molding material is fed to a front side of the screw 330 and is accumulated in the front portion of the cylinder 310, and thus, the screw 330 moves rearward. Thereafter, when the screw 330 moves forward, the liquid molding material accumulated in the front side of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the helical grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a force transmitted between the injection motor 350 and the screw 330. The detected force is converted into a pressure by the controller 700. The pressure detector 360 is provided on a force transmission path between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed and the molding material is fed forward along the helical grooves of the screw 330 by the screw 330. According to this, the molding material is gradually melted. The liquid molding material is fed to a front side of the screw 330 and is accumulated in the front portion of the cylinder 310, and thus, the screw 330 moves rearward. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotational speed detector which detects the rotating speed of the screw 330 is not limited to the plasticizing motor encoder 341, and a general detector can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

The position and rotating speed of the screw 330 in the plasticizing process are collectively set as a series of setting conditions. For example, the plasticizing start position, a rotating speed switching position, and the plasticizing completion position are set. These positions are disposed in this order from the front side to the rear side, and indicate start points and end points of sections where the rotating speed is set. The rotating speed is set for each section. The rotating speed switching position may be one or more. The rotating speed switching position may not be set. In addition, the back pressure is set for each section.

In the filling process, the injection motor 350 is driven to move the screw 330 forward at a set movement speed, and the cavity space 801 inside the mold unit 800 is filled with the liquid molding material accumulated in front of the screw 330. For example, a position or movement speed of the screw 330 is detected using an injection motor encoder 351. The injection motor encoder 351 detects the rotation of the injection motor 350 and sends a signal indicating a detection result to the controller 700. When the position of the screw 330 reaches a set position, switching (so called V/P switching) from the filling process to the holding pressure process is performed. The position at which the V/P switching is performed is also referred to a V/P switching position. The set movement speed of the screw 330 may be changed according to the position of the screw 330, the time, or the like.

The position and the movement speed of the screw 330 in the filling process are collectively set as a series of setting conditions. For example, a filling start position (also called "injection start position"), a movement speed switching position, and a V/P switching position are set. These positions are disposed in this order from the rear side to the front side, and indicate the start points and the end points of the sections where the movement speed is set. The movement speed is set for each section. The movement speed switching position may be one or more. The movement speed switching position may not be set.

An upper limit of the pressure of the screw 330 is set for each section where the movement speed of the screw 330 is set. The pressure of the screw 330 is detected by the pressure detector 360. In a case where a detection value of the pressure detector 360 is a set pressure or less, the screw 330 moves forward at the set movement speed. Meanwhile, in a case where the detection value of the pressure detector 360 exceeds the set pressure, in order to protect the mold, the screw 330 moves forward at a movement speed slower than the set movement speed such that the detection value of the pressure detector 360 is the set pressure or less.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like. A plurality of holding pressures and a plurality of holding times during when the holding pressures are held in the holding pressure process may be set, and may be collectively set as a series of setting conditions.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable and unmovable forward or rearward in the plasticizing cylinder or the screw is disposed to be rotatable and movable forward or rearward in the injection cylinder. Meanwhile, a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Moving Unit)

Similarly to the descriptions of the injection unit 300, in descriptions of the moving unit 400, the movement direction (for example, X-axis negative direction) of the screw 330 during filling is referred to as a front side, and the movement direction (X-axis positive direction) of the screw 330 during plasticizing is referred to as a rear side.

The moving unit 400 moves the injection unit 300 rearward with respect to the mold unit 800. In addition, the moving unit 400 presses the nozzle 320 to the mold unit 800 to generate a nozzle touch pressure. The moving unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a hydraulic pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servomotor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed against the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the moving unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressurization process, the mold clamping process, the filling process, the holding pressure process, a cooling process, the depressurization process, the mold opening process, an ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the mold clamping process, the filling process, the holding pressure process, the cooling process, the depressurization process, the mold opening process, and the ejection process in this order. Here, this order is an order of the start of each process. The filling process, the holding pressure process, and the cooling process are performed during the mold clamping process. The start of the mold clamping process may coincide with the start of the filling process. The end of the depressurization process coincides with the start of the mold opening process.

In addition, in order to shorten the molding cycle time, the plurality of processes may be simultaneously performed. For example, the plasticizing process may be performed during the cooling process of the previous molding cycle, or may be performed during the mold clamping process. In this case, the mold closing process may be performed at a beginning of the molding cycle. In addition, the filling process may start during the mold closing process. Moreover, the ejection process may be started during the mold opening process. In a case where an on/off valve which opens or closes the flow path of the nozzle 320 is provided, the mold opening process may be started during the plasticizing process. Accordingly, even when the mold opening process starts during the plasticizing process, if the on-off valve closes the flow path of the nozzle 320, the molding material does not leak from the nozzle 320.

In addition, the once molding cycle may include a process in addition to the plasticizing process, the mold closing process, the pressurization process, the mold clamping process, the filling process, the holding pressure process, the cooling process, the depressurization process, the mold opening process, and the ejection process.

For example, before the plasticizing process starts after the holding pressure process is completed, a pre-plasticizing suck-back process in which the screw 330 moves rearward to a preset plasticizing start position may be performed. It is possible to decrease the pressure of the molding material accumulated in front of the screw 330 before the plasticizing process starts, and it is possible to prevent the abrupt rearward movement of the screw 330 when the plasticizing process starts.

In addition, before the filling process starts after the plasticizing process is completed, a post-plasticizing suck-back process in which the screw 330 moves rearward to a preset filling start position (also referred to as an "injection start position") may be performed. It is possible to decrease the pressure of the molding material accumulated in front of the screw 330 before the filling process starts, and leakage of the molding material from the nozzle 320 before the filling process starts can be prevented.

The controller 700 is connected to an operation unit 750 which receives input operations by a user and a display unit 760 which displays a screen. For example, the operation unit 750 and the display unit 760 may be constituted by a touch panel 770 and integrated with each other. The touch panel 770 as the display unit 760 displays the display screen under the control of the controller 700. For example, information such as setting of the injection molding machine 10 and a current state of the injection molding machine 10 may be displayed on the screen of the touch panel 770. Further, for example, an operation unit such as a button or an input field which receives an input operation by the user may be displayed on the screen of the touch panel 770. The touch panel 770 as the operation unit 750 detects the input operation on the screen by the user and outputs a signal corresponding to the input operation to the controller 700. As a result, for example, the user operates the operation unit provided on the screen while checking the information displayed on the screen, and thus, can set the injection molding machine 10 (including inputting the set value) or the like. Further, the user operates the operation unit provided on the screen, and thus, can operate the injection molding machine 10 corresponding to the operation unit. Moreover, for example, the operation of the injection molding machine 10 may be an operation (including stopping) of the mold clamping unit 100, the ejector unit 200, the injection unit 300, the moving unit 400, or the like. Further, the operation of the injection molding machine 10 may be switching of the screen displayed on the touch panel 770 as the display unit 760.

In addition, although the operation unit 750 and the display unit 760 of the present embodiment are described as being integrated as a touch panel 770, the operation unit 750 and the display unit 760 may be provided independently. In addition, a plurality of the operation units 750 may be provided. The operation unit 750 and the display unit 760 are disposed on an operation side (Y-axis negative direction) of the mold clamping unit 100 (more specifically, the stationary platen 110).

### (Screen of Touch Panel of Injection Molding Machine)

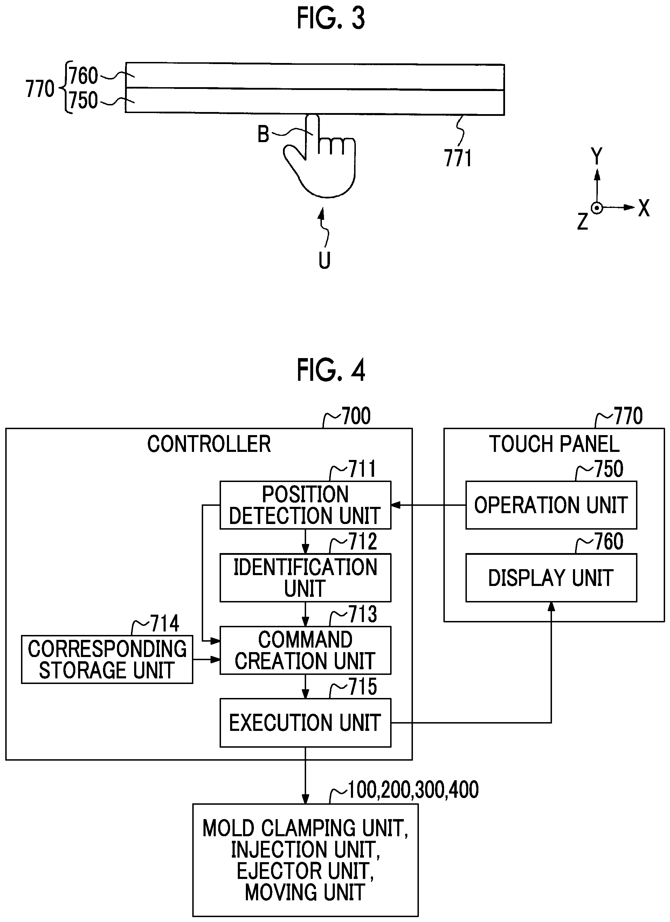

Fig. 3 is a diagram showing the touch panel of the injection molding machine according to the embodiment. In the description of the touch panel 770, a user U side with respect to the touch panel 770 is referred to as a front side, and a side opposite to the user U with respect to the touch panel 770 is referred to as a rear side. That is, the Y-axis negative direction is referred to as the front side, and at Y-axis positive direction is referred to as the rear side.

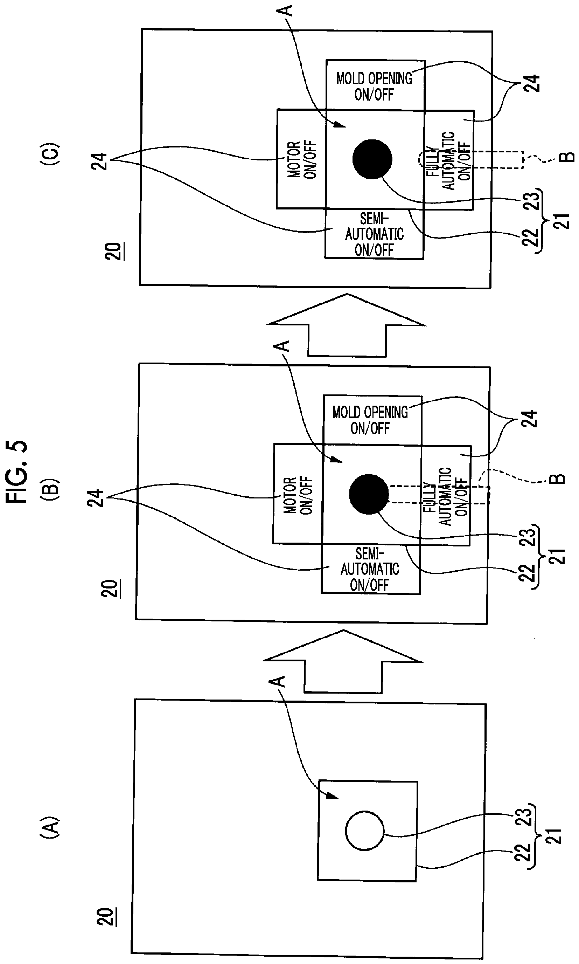

The touch panel 770 includes the display unit 760 which displays a screen 20 shown in Fig. 5 on a front surface 771 of the touch panel 770, and the operation unit 750 which generates a signal of a touch position of an object B on the screen 20. In the present embodiment, the object B is a finger of the user U. However, the object B may be a pen or the like. The operation unit 750 is disposed in front of the display unit 760 in the present embodiment. However, the operation unit 750 may be disposed behind the display unit 760.

For example, the display unit 760 is a liquid crystal panel or the like. Meanwhile, for example, the operation unit 750 is a touch sensor or the like. The touch sensor detects the touch position of the object B on the screen 20. A method of detecting the touch position is not particularly limited. However, for example, the method may be a capacitance method. An example of the capacitance method includes a surface type capacitance method and a projection type capacitance method. The projection type capacitance method includes a self-capacitance method, a mutual capacitance method, or the like. Simultaneous multipoint detection can be realized by using the mutual capacitance method.

Fig. 4 is a functional block diagram showing components of the controller of Fig. 1. Each functional block shown in Fig. 4 is conceptual and does not necessarily need to be physically configured as shown. It is possible to configure all or some of the functional blocks by functionally or physically dispersing and integrating in any unit. All or some of processing functions performed in the functional blocks can be realized by a program executed by the CPU or can be realized as hardware by wired logic.

The controller 700 has a position detection unit 711. The position detection unit 711 detects the touch position of the object B on the screen 20 by the signal received from the operation unit 750. The position detection unit 711 sends the detected touch position to an identification unit 712. The position detection unit 711 may send the detected touch position to a command creation unit 713.

The controller 700 has the identification unit 712. The identification unit 712 identifies a first touch operation and a second touch operation which are different from each other for one operation unit 21 displayed on the screen 20. The number of touch operations to be identified may be two or more. For example, the identification unit 712 may identify the first touch operation, the second touch operation, and a third touch operation different from each other for one operation unit 21.

The identification unit 712 identifies the first touch operation and the second touch operation from the touch position detected by the position detection unit 711. For example, the touch operation of the object B includes an operation of sliding the object B, and a sliding direction of the object B is different between the first touch operation and the second touch operation. Alternatively, the touch operation of the object B includes an operation of drawing a symbol by the object B, and the symbol drawn by the object B is different from the first touch operation and the second touch operation. In the present specification, the "symbol" includes a character, a number, a figure, or the like.

The controller 700 has the command creation unit 713. The command creation unit 713 creates a command to execute a first operation of the injection molding machine 10 when the identification unit 712 identifies the first touch operation, and creates a command to execute a second operation different from the first operation when the identification unit 712 identifies the second touch operation. For each screen 20, the touch operation of the object B and the command are associated with each other and stored in the corresponding storage unit 714. The command creation unit 713 creates a command with reference to information stored in the corresponding storage unit 714.

The screen 20 may include an operation unit in which only one touch operation is executed. Since the number of touch operations for this operation unit is one, it is not necessary to identify the touch operations. When it is not necessary to identify the touch operation, the command creation unit 713 may directly create a command from the touch position detected by the position detection unit 711.

The controller 700 has an execution unit 715. The execution unit 715 executes the operation of the injection molding machine 10 according to the command created by the command creation unit 713. For example, the execution unit 715 executes the first operation of the injection molding machine 10 when the identification unit 712 identifies the first touch operation, and executes the second operation different from the first operation when the identification unit 712 identifies the second touch operation.

For example, the operation of the injection molding machine 10 includes the operation (including start and stop) of at least one unit selected from the mold clamping unit 100, the ejector unit 200, the injection unit 300, and the moving unit 400. The operation of the injection molding machine 10 includes switching the screen displayed on the display unit 760 or the like.

The user U touch-operates the operation unit 21 provided on the screen 20 so as to execute the operation of the injection molding machine 10 corresponding to the operation unit 21. The user U touch-operates the operation unit provided on the screen 20 while checking the information displayed on the screen 20 so as to execute the setting (including inputting the set value) of the injection molding machine 10 or the like.

Next, an example of the screen 20 will be described with reference to Figs. 5A to 5C. As shown in Fig. 5(A) or the like, the screen 20 has the operation unit 21 on which the touch operation of the object B is executed. The touch operation of the object B with respect to the operation unit 21 includes the operation of sliding the object B, and the sliding direction the object B is different between the first touch operation and the second touch operation. That is, the touch operation for the operation unit 21 includes a flick input. The flick input determines an operation to be executed.

The operation unit 21 has a touch operation region A capable of inputting an operation by a contact, and a partition frame 22 for partitioning the touch operation region A.

The touch operation region A is a region which occupies a predetermined portion of the screen 20 of the touch panel 770. The touch operation region A is a region in which the touch operation of the user U can be received, and the user U executes the touch operation in the touch operation region A to operate the injection molding machine 10 corresponding to the touch operation.

The partition frame 22 partitions the touch operation region A and remaining regions other than the touch operation region A. The partition frame 22 is a boundary which partitions one touch operation region A and a region other than the one touch operation region A. Only one touch operation region A is disposed in the partition frame 22. The partition frame 22 partitions the single touch operation region A from another region.

The partition frame 22 may partition one touch operation region A and another touch operation region, or may partition a plurality of touch operation regions. Only one touch operation region A is disposed in one partition frame 22.

The touch operation region A has a reference portion 23 which serves as a reference for receiving the touch operation. The reference portion 23 is disposed substantially in the center of the touch operation region A. The reference portion 23 has a substantially circular shape. The operation unit 21 receives an operation by contacting the reference portion 23, and the operation of the corresponding injection molding machine 10 is selected by a subsequent touch operation.

For example, the operation unit 21 includes the quadrangular partition frame 22 and the reference portion 23 inside the partition frame 22. The user U touches the object B to the reference portion 23, and then slides the object B from the reference portion 23 toward one side of the partition frame 22. The number of sides of the partition frame 22 represents the number of operations which can be selected. For example, the number of sides of the partition frame 22 is the same as the number of operations. However, the number of sides of the partition frame 22 may be equal to or more than the number of operations, and may be more than the number of operations. The shape of the partition frame 22 may be polygonal and is not limited to a quadrangle. For example, the shape of the partition frame 22 may be a triangle, a pentagon, a hexagon, or the like.

First, when the user U touches the object B to the reference portion 23, the position detection unit 711 detects the touch, and then the command creation unit 713 creates a command to switch the display of the reference portion 23, and the execution unit 715 switches the display of the reference portion 23. As shown in Figs. 5A and 5B, since the display of the reference portion 23 is switched before and after the touch, the user U can confirm on the screen 20 that the position detection unit 711 has already detected the touch of the object B to the reference portion 23.

Further, when the user U touches the object B to the reference portion 23, the position detection unit 711 detects the touch, and then the command creation unit 713 creates a command to display a posting unit 24 around the operation unit 21, and the execution unit 715 executes the display of the posting unit 24. As shown in Fig. 5(B), the posting unit 24 is provided for each direction in which the object B slides, and posts a content of the operation executed by the sliding operation of the object B. The user U can slide the object B in a desired direction while checking a relationship between the sliding direction and the operation to be executed. Therefore, it is possible to suppress an erroneous operation of the user U who is unfamiliar with the handling of the operation unit 21.

The user U, who is accustomed to handling the operation unit 21, knows the content of the operation to be executed without looking at the posting unit 24. Therefore, the user U who is accustomed to the handling of the operation unit 21 can execute the flick input without waiting for the display of the posting unit 24. Unlike an input using a pull-down list, the flick input does not require confirmation on the screen 20, and thus, quick input is possible.

The flick input is not an operation of pressing one of a plurality of candidates in the pull-down list with a point, but an operation of drawing a line so as to connect a plurality of points to each other. Accordingly, it is possible to suppress a mistake in pressing the user U. Further, the flick input is not an operation of pressing one of the plurality of candidates in the pull-down list with a point, but an operation of selecting a direction. Even if the position of the object B on the screen 20 is easily displaced between eyes of the user U and the position detection unit 711, for example, even if a size of the screen 20 is small, the sliding directions of the object B coincide with each other. Therefore, the flick input is particularly effective when the position of the object B is likely to be displaced between the eyes of the user U and the position detection unit 711.

A plurality of posting units 24 may be displayed on the screen where the object B touches the operation unit 21 as shown in Fig. 5(B), and may not be displayed on the screen 20 where the object B does not touch the operation unit 21 as shown in Fig. 5(A). When the touch operation on the operation unit 21 is not executed, it is possible to prevent the amount of information on the screen 20 from becoming unnecessarily large, and it is possible to improve visibility of the screen 20.

In the present embodiment, the plurality of posting units 24 are not displayed on the screen 20 in which the object B does not touch the operation unit 21 as shown in Fig. 5(A), but may be displayed. As long as the amount of information on the screen 20 is not too large so that the visibility of the screen 20 is not impaired, the plurality of posting units 24 may always be displayed on the screen 20.

As shown in Fig. 5(C), when the sliding direction of the object B is downward, the operation to be executed is the start or stop of the fully automatic mode. The fully automatic mode is a mode in which a series of processes such as the plasticizing process, the mold closing process, the pressurization process, the mold clamping process, the filling process, the holding pressure process, the cooling process, the depressurization process, the mold opening process, and the ejection process are repeated automatically. When the user U slides the object B downward from the reference portion 23 while the fully automatic mode is stopped, the fully automatic mode is started. Meanwhile, when the user U slides the object B downward from the reference portion 23 while the fully automatic mode is executed, the fully automatic mode is stopped.

Further, when the sliding direction of the object B is a left direction, the operation to be executed is start or stop of a semi-automatic mode. The "semi-automatic mode" is a mode in which the above series of processes are automatically executed only once. When the user U slides the object B in the left direction from the reference portion 23 while the semi-automatic mode is stopped, the semi-automatic mode starts. Meanwhile, if the user U slides the object B in the left direction from the reference portion 23 while the semi-automatic mode is executed, the semi-automatic mode is stopped.

Further, when the sliding direction of the object B is upward, the operation to be executed is to start driving or stop driving the motor. For example, the motor is the mold clamping motor 160, the mold space adjustment motor 183, the ejector motor, the plasticizing motor 340, the injection motor 350, the motor 420, or the like. A type of motor is determined in advance and stored in the corresponding storage unit 714. When the user U slides the object B in the up direction from the reference portion 23 while the motor is stopped, the driving of the motor is started. Meanwhile, if the user U slides the object B in the up direction from the reference portion 23 while the motor is driven, the driving of the motor is stopped.

Furthermore, when the sliding direction of the object B is to a right direction, the operation to be executed is the start or stop of the mold opening of the mold clamping unit 100. When the user U slides the object B in the right direction from the reference portion 23 while the mold clamping unit 100 is stopped, the mold opening of the mold clamping unit 100 is started. Meanwhile, when the user U slides the object B in the right direction from the reference portion 23 during the mold opening of the mold clamping unit 100, the mold opening of the mold clamping unit 100 is stopped.

A relationship between the sliding direction of the object B and the operation to be executed is not limited to the relationship shown in Fig. 5(B). Further, the number of sliding directions of the objects B may be plural, and is not limited to four. Further, the operation to be executed may be any operation of the injection molding machine 10, and is not limited to the start or stop of the fully automatic mode.

As shown in Fig. 5(C), when the user U slides the object B in a desired direction in a state where the user U touches the object B to the operation unit 21, the identification unit 712 identifies the sliding direction, and subsequently, the command creation unit 713 creates a command associated with the sliding direction, and the execution unit 715 further executes the command created by the command creation unit 713.

As described above, according to the present embodiment, the controller 700 includes the identification unit 712 and the execution unit 715. The identification unit 712 identifies the first touch operation and the second touch operation which are different from each other for one operation unit 21. The execution unit 715 executes the first operation of the injection molding machine 10 when the identification unit 712 identifies the first touch operation, and executes the second operation different from the first operation when the identification unit 712 identifies the second touch operation. Therefore, a plurality of operations can be executed by using one operation unit 21. Therefore, compared with a case of the related art where one operation is executed as soon as one operation unit is touched and other operations are not executed, it is possible to decrease the number of operation units 21 disposed on the screen 20 of the touch panel 770. As a result, the user U can search for the target operation unit 21 at a short time.

Further, according to the present embodiment, the operation of the injection molding machine 10 can be executed by the touch operation of the screen 20. Compared to a case of the related art where the operation of the injection molding machine 10 is executed by operating a hardware key (button) disposed next to the touch panel 770, the number of hardware keys can be reduced and can be zero. Accordingly, the following effects (1) and (6) can be obtained.
(1) Since the number of hardware keys is reduced, a cost is reduced.
(2) Since the number of hardware keys is reduced, occurrence of a failure is reduced.
(3) Since the number of hardware keys is reduced, a device can be miniaturized.
(4) Since the operation unit 21 is provided on the screen 20, it is possible to verify by simulation whether a series of functions of the controller 700 following the touch operation on the operation unit 21 functions correctly.
(5) Since the operation unit 21 is provided on the screen 20, the operation can be changed and/or added by changing the software, and it is easy to revise after delivery of the injection molding machine 10.
(6) Since the operation unit 21 is provided on the screen 20, it is possible to acquire a moving image or a still image of the screen 20 and easily create a guide for the input operation on the screen 20.

Further, according to the present embodiment, the touch operation of the object B with respect to the operation unit 21 includes an operation of sliding the object B, and the sliding direction of the object B is different between the first touch operation and the second touch operation. That is, the touch operation for the operation unit 21 includes the flick input. The flick input determines an operation to be executed. Unlike the input using the pull-down list, the flick input does not require confirmation on the screen 20, and thus, quick input is possible. Further, the flick input is not an operation of pressing one of a plurality of candidates in the pull-down list with a point, but an operation of drawing a line so as to connect a plurality of points, so that it is possible to suppress a mistake in pressing the user U. Further, the flick input is not an operation of pressing one of a plurality of candidates in the pull-down list with a point, but an operation of selecting a direction. Even if the position of the object B on the screen 20 is easily displaced between the eyes of the user U and the position detection unit 711, for example, even if the size of the screen 20 is small, the sliding directions of the object B coincide with each other. Therefore, the flick input is particularly effective when the position of the object B is likely to be displaced between the eyes of the user U and the position detection unit 711.

In the present embodiment, the reference portion 23 is provided in the touch operation region A. However, the reference portion 23 may not be provided. For example, the operation of the injection molding machine 10 may be selected by contacting any position in the touch operation region A and sliding from the contacted position. The corresponding storage unit 714 may store the sliding direction from the contacted position and the operation of the injection molding machine 10 in association with each other.

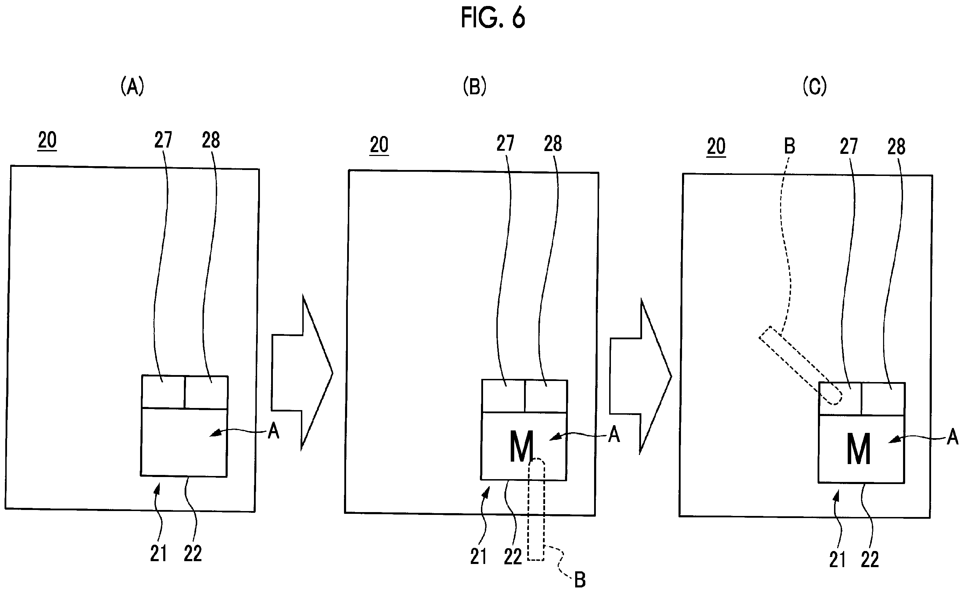

Next, another example of the screen 20 will be described with reference to Figs. 6 (A) to 6(C). As shown in Fig. 6 (A) and the like, the screen 20 has the operation unit 21 on which the touch operation of the object B is executed. The touch operation of the object B with respect to the operation unit 21 includes an operation of drawing a symbol by the object B, and the symbol drawn by the object B in the first touch operation is different the symbol drawn by the object B in the second touch operation. That is, the touch operation for the operation unit 21 includes a symbol input. The symbol input determines the operation to be executed.

For example, the operation unit 21 includes the quadrangular partition frame 22. The user U moves the object B inside the partition frame 22 while touching the object B to the operation unit 21, and draws a symbol. While the symbol is drawn, the position detection unit 711 detects the touch position of the object B, the command creation unit 713 creates a command to display the symbol drawn by the object B inside the partition frame 22, and the execution unit 715 displays the symbol inside the operation unit 21 according to the command. The user U can confirm the symbol detected by the position detection unit 711 on the screen 20. The shape of the partition frame 22 is not limited to a quadrangle. For example, the shape of the partition frame 22 may be a triangle, a pentagon, a hexagon, a circle, an ellipse, or the like.

A confirmation unit 27 on which a touch operation for confirming the symbol is executed may be disposed next to the operation unit 21. The identification unit 712 does not identify the first touch operation and the second touch operation until the object B touches the confirmation unit 27. When the user U finishes the drawing of the symbol, the user U touches the object B to the confirmation unit 27. As a result, the symbol is confirmed, and the identification unit 712 identifies the first touch operation and the second touch operation. Unlike a case where the symbol is automatically confirmed when the user U separates the object B from the operation unit 21, the user U can temporarily separate the object B from the operation unit 21 while drawing the symbol, and can draw a symbol which cannot be drawn with a single stroke. The identification unit 712 identifies the symbols drawn from the previous touch of the object B to the confirmation unit 27 to the touch of the object B to the confirmation unit 27 this time. When the confirmation unit 27 is touched, the confirmed symbol is erased and a new symbol can be drawn. Further, when the confirmation unit 27 is touched, the display inside the partition frame 22 is erased.

Further, an erasing unit 28 on which the touch operation for erasing the symbol is executed may be disposed next to the operation unit 21. When the object B touches the erasing unit 28, the identification unit 712 invalidates the symbol drawn until the object B touches the erasing unit 28, and stops the identification of the symbol. When the user U draws an erroneous symbol, the user U touches the object B to the erasing unit 28. A wrong old symbol can be erased and a correct new symbol can be drawn. The identification unit 712 identifies a symbol drawn after the object B touches the erasing unit 28, and for example, identifies a symbol drawn from the touch of the object B to the erasing unit 28 to the touch of the object B to the confirmation unit 27. Further, when the erasing unit 28 is touched, the display inside the partition frame 22 is erased.

As shown in Fig. 6(B), when "M" is drawn as the symbol, the operation to be executed is the start or stop of driving of the motor. For example, the motor is the mold clamping motor 160, the mold space adjustment motor 183, the ejector motor, the plasticizing motor 340, the injection motor 350, the motor 420, or the like. A type of motor is determined in advance and stored in the corresponding storage unit 714. While the motor is stopped, "M" is drawn as the symbol, and then when the confirmation unit 27 is touched, the driving of the motor is started. Meanwhile, while the motor is driven, when "M" is drawn as the symbol and then the confirmation unit 27 is touched, the driving of the motor is stopped.

Further, although not shown, when "E" is drawn as the symbol and then "C" is drawn, the operation to be executed is an abnormality release (Error Clear). When the controller 700 of the injection molding machine 10 detects an abnormality in the operation of the injection molding machine 10 using a temperature detector, a pressure detector, a torque detector, or the like, the controller 700 executes a specific operation such as alarm notification. When the abnormality in the operation of the injection molding machine 10 is detected, "E" is drawn as the symbol, then "C" is drawn, and then when the confirmation unit 27 is touched, the abnormality is released, and for example, the alarm notification is stopped.

Further, although not shown, when "→" is drawn as the symbol, the operation to be executed is the same as the execution button of the hardware key. For example, after a numerical value is input in an input field (not shown), "→" is drawn as the symbol on the operation unit 21, and then when the confirmation unit 27 is touched, the numerical value input in the input field is confirmed, the confirmed numerical value is stored in the storage medium 702 as a set value.

When the confirmation unit 27 is touched as shown in Fig. 6(C), the identification unit 712 identifies the first touch operation and the second touch operation. The command creation unit 713 creates a command to execute a first operation of the injection molding machine 10 when the identification unit 712 identifies the first touch operation, and creates a command to execute a second operation different from the first operation when the identification unit 712 identifies the second touch operation. The execution unit 715 executes the command created by the command creation unit 713.

As described above, the controller 700 includes the identification unit 712 and the execution unit 715. For example, the identification unit 712 may identify the first touch operation, the second touch operation, and a third touch operation different from each other for one operation unit 21. The execution unit 715 executes the first operation of the injection molding machine 10 when the identification unit 712 identifies the first touch operation, and executes the second operation different from the first operation when the identification unit 712 identifies the second touch operation. Therefore, a plurality of operations can be executed by using one operation unit 21. Therefore, compared with a case of the related art where one operation is executed as soon as one operation unit is touched and other operations are not executed, it is possible to decrease the number of operation units 21 disposed on the screen 20 of the touch panel 770. As a result, the user U can search for the target operation unit 21 at a short time.

Further, according to the present embodiment, the operation of the injection molding machine 10 can be executed by the touch operation of the screen 20. Compared to a case of the related art where the operation of the injection molding machine 10 is executed by operating a hardware key (button) disposed next to the touch panel 770, the number of hardware keys can be reduced and can be zero. As a result, the above-mentioned effects (1) to (6) can be obtained.

Further, according to the present embodiment, the touch operation of the object B with respect to the operation unit 21 includes an operation of drawing a symbol by the object B, and the symbol drawn by the object B in the first touch operation is different the symbol drawn by the object B in the second touch operation. That is, the touch operation includes a symbol input. The symbol input determines the operation to be executed. Compared with the flick input, the symbol input can easily increase the number of touch operations for one operation unit 21, and can easily increase the number of operations which can be executed using one operation unit 21.

Hereinbefore, the embodiment of the injection molding machine is described. However, the present invention is not limited to the above embodiment, but its scope is defined the appended claims.

### Brief Description of the Reference Symbols

- 10:: injection molding machine
- 20:: screen
- 21:: operation unit
- 24:: posting unit
- 27:: confirmation unit
- 28:: erasing unit
- 700:: controller
- 712:: identification unit
- 715:: execution unit
- 770:: touch panel
- U:: user
- B:: object

## Claims

1. An injection molding machine (10) comprising:
a touch panel (770) which includes an operation unit (21), on which a touch operation of an object (B) is executed, in a screen (20); and
a controller (700) configured to execute an operation of an injection molding machine (10) based on the touch operation on the operation unit (21),
**characterized in that**
the controller (700) includes
an identification unit (712) configured to identify a first touch operation and a second touch operation different from each other for one operation unit, and
an execution unit (715) configured to execute a first operation of the injection molding machine (10) when the identification unit (712) identifies the first touch operation and execute a second operation different from the first operation when the identification unit (712) identifies the second touch operation,
the touch operation of the object (B) includes an operation of sliding the object (B),
a sliding direction of the object (B) is different between the first touch operation and the second touch operation,
the screen (20) of the touch panel (770) includes a posting unit (24) configured to post a content of an operation executed by a sliding operation of the object (B) in each direction in which the object (B) slides, next to the operation unit (21), and
the posting unit (24) is displayed on the screen (20) when the object (B) touches the operation unit (21), and the posting unit (24) is not displayed on the screen (20) when the object (B) does not touch the operation unit (21).

2. The injection molding machine (10) according to claim 1,
wherein the sliding operation of the object (B) is received even when the posting unit (24) is not displayed.

3. An injection molding machine (10) comprising:
a touch panel (770) which includes an operation unit (21), on which a touch operation of an object (B) is executed, in a screen (20); and
a controller (700) configured to execute an operation of an injection molding machine (10) based on the touch operation on the operation unit (21),
**characterized in that**
the controller (700) includes
an identification unit (712) configured to identify a first touch operation and a second touch operation different from each other for one operation unit, and
an execution unit (715) configured to execute a first operation of the injection molding machine (10) when the identification unit (712) identifies the first touch operation and execute a second operation different from the first operation when the identification unit (712) identifies the second touch operation,
the touch operation of the object (B) includes an operation of drawing a symbol by the object (B), and
the symbol drawn by the object (B) is different between the first touch operation and the second touch operation.

4. The injection molding machine (10) according to claim 3,
wherein the screen (20) of the touch panel (770) includes a confirmation unit (27), on which a touch operation for confirming the symbol is executed, next to the operation unit (21), and
the identification unit (712) does not identify the first touch operation and the second touch operation until the object (B) touches the confirmation unit (27).

5. The injection molding machine (10) according to claim 3 or 4,
wherein the screen (20) of the touch panel (770) includes an erasing unit (28), on which a touch operation for erasing the symbol is executed, next to the operation unit (21), and
when the object (B) touches the erasing unit (28), the identification unit (712) invalidates the symbol drawn until the object (B) touches the erasing unit (28).

## Patentansprüche

1. Spritzgießmaschine (10), umfassend:
ein Touchpanel (770), das eine Bedieneinheit (21), an der ein Berührungsvorgang eines Objekts (B) ausgeführt wird, in einem Bildschirm (20) umfasst; und
eine Steuerung (700), die konfiguriert ist, einen Vorgang einer Spritzgießmaschine (10) basierend auf dem Berührungsvorgang an der Bedieneinheit (21) auszuführen,
**dadurch gekennzeichnet, dass**
die Steuerung (700) umfasst
eine Erkennungseinheit (712), die konfiguriert ist, einen ersten Berührungsvorgang und einen zweiten Berührungsvorgang zu erkennen, die sich für eine Bedieneinheit voneinander unterscheiden, und
eine Ausführungseinheit (715), die konfiguriert ist, einen ersten Vorgang der Spritzgießmaschine (10) auszuführen, wenn die Erkennungseinheit (712) den ersten Berührungsvorgang erkennt, und einen zweiten Vorgang auszuführen, der sich von dem ersten Vorgang unterscheidet, wenn die Erkennungseinheit (712) den zweiten Berührungsvorgang erkennt,
der Berührungsvorgang des Objekts (B) einen Vorgang des Gleitens des Objekts (B) umfasst,
eine Gleitrichtung des Objekts (B) zwischen dem ersten Berührungsvorgang und dem zweiten Berührungsvorgang unterschiedlich ist,
der Bildschirm (20) des Touchpanels (770) eine Angabeeinheit (24), die konfiguriert ist, einen Inhalt eines Vorgangs, der durch einen Gleitvorgang des Objekts (B) ausgeführt wird, in jeder Richtung anzugeben, in der das Objekt (B) gleitet, neben der Bedieneinheit (21) umfasst, und
die Angabeeinheit (24) auf dem Bildschirm (20) angezeigt wird, wenn das Objekt (B) die Bedieneinheit (21) berührt, und die Angabeeinheit (24) nicht auf dem Bildschirm (20) angezeigt wird, wenn das Objekt (B) die Bedieneinheit (21) nicht berührt.

2. Spritzgießmaschine (10) nach Anspruch 1,
wobei der Gleitvorgang des Objekts (B) selbst dann empfangen wird, wenn die Angabeeinheit (24) nicht angezeigt wird.

3. Spritzgießmaschine (10), umfassend:
ein Touchpanel (770), das eine Bedieneinheit (21), an der ein Berührungsvorgang eines Objekts (B) ausgeführt wird, in einem Bildschirm (20) umfasst; und
eine Steuerung (700), die konfiguriert ist, einen Vorgang einer Spritzgießmaschine (10) basierend auf dem Berührungsvorgang an der Bedieneinheit (21) auszuführen,
**dadurch gekennzeichnet, dass**
die Steuerung (700) umfasst
eine Erkennungseinheit (712), die konfiguriert ist, einen ersten Berührungsvorgang und einen zweiten Berührungsvorgang zu erkennen, die sich für eine Bedieneinheit voneinander unterscheiden, und
eine Ausführungseinheit (715), die konfiguriert ist, einen ersten Vorgang der Spritzgießmaschine (10) auszuführen, wenn die Erkennungseinheit (712) den ersten Berührungsvorgang erkennt, und einen zweiten Vorgang auszuführen, der sich von dem ersten Vorgang unterscheidet, wenn die Erkennungseinheit (712) den zweiten Berührungsvorgang erkennt,
der Berührungsvorgang des Objekts (B) einen Vorgang des Ziehens eines Symbols durch das Objekt (B) umfasst, und
das durch das Objekt (B) gezogene Symbol zwischen dem ersten Berührungsvorgang und dem zweiten Berührungsvorgang unterschiedlich ist.

4. Spritzgießmaschine (10) nach Anspruch 3,
wobei der Bildschirm (20) des Touchpanels (770) eine Bestätigungseinheit (27), an der ein Berührungsvorgang zur Bestätigung des Symbols ausgeführt wird, neben der Bedieneinheit (21) umfasst, und
die Erkennungseinheit (712) den ersten Berührungsvorgang und den zweiten Berührungsvorgang nicht erkennt, bis das Objekt (B) die Bestätigungseinheit (27) berührt.

5. Spritzgießmaschine (10) nach Anspruch 3 oder 4,
wobei der Bildschirm (20) des Touchpanels (770) eine Löscheinheit (28), an der ein Berührungsvorgang zum Löschen des Symbols ausgeführt wird, neben der Bedieneinheit (21) umfasst, und
wenn das Objekt (B) die Löscheinheit (28) berührt, die Erkennungseinheit (712) das Symbol unwirksam macht, bis das Objekt (B) die Löscheinheit (28) berührt.

## Revendications

1. Un machine de moulage par injection (10) comprenant :
un panneau tactile (770) qui inclut une unité d'opération (21), sur laquelle une opération de toucher d'un objet (B) est exécutée, dans un écran (20) ; et
un contrôleur (700) configuré de manière à exécuter une opération d'une machine de moulage par injection (10), sur la base de l'opération de toucher exécutée sur l'unité d'opération (21) ;
**caractérisée en ce que** :
le contrôleur (700) inclut :
une unité d'identification (712) configurée de manière à identifier une première opération de toucher et une seconde opération de toucher, différentes l'une de l'autre, pour une unité d'opération ; et
une unité d'exécution (715) configurée de manière à exécuter une première opération de la machine de moulage par injection (10), lorsque l'unité d'identification (712) identifie la première opération de toucher, et à exécuter une seconde opération, différente de la première opération, lorsque l'unité d'identification (712) identifie la seconde opération de toucher ;
l'opération de toucher de l'objet (B) inclut une opération de glissement de l'objet (B) ;
une direction de glissement de l'objet (B) est différente entre la première opération de toucher et la seconde opération de toucher ;
l'écran (20) du panneau tactile (770) inclut une unité de publication (24), configurée de manière à publier un contenu d'une opération exécutée par une opération de glissement de l'objet (B) dans chaque direction dans laquelle l'objet (B) glisse, à côté de l'unité d'opération (21) ; et
l'unité de publication (24) est affichée sur l'écran (20) lorsque l'objet (B) touche l'unité d'opération (21), et l'unité de publication (24) n'est pas affichée sur l'écran (20) lorsque l'objet (B) ne touche pas l'unité d'opération (21).

2. La machine de moulage par injection (10) selon la revendication 1,
dans laquelle l'opération de glissement de l'objet (B) est reçue y compris lorsque l'unité de publication (24) n'est pas affichée.

3. Une machine de moulage par injection (10) comprenant :
un panneau tactile (770) qui inclut une unité d'opération (21), sur laquelle une opération de toucher d'un objet (B) est exécutée, dans un écran (20) ; et
un contrôleur (700) configuré de manière à exécuter une opération d'une machine de moulage par injection (10), sur la base de l'opération de toucher exécutée sur l'unité d'opération (21) ;
**caractérisée en ce que** :
le contrôleur (700) inclut :
une unité d'identification (712) configurée de manière à identifier une première opération de toucher et une seconde opération de toucher, différentes l'une de l'autre, pour une unité d'opération ; et
une unité d'exécution (715) configurée de manière à exécuter une première opération de la machine de moulage par injection (10), lorsque l'unité d'identification (712) identifie la première opération de toucher, et à exécuter une seconde opération, différente de la première opération, lorsque l'unité d'identification (712) identifie la seconde opération de toucher ;
l'opération de toucher de l'objet (B) inclut une opération de dessin d'un symbole par l'objet (B) ; et
le symbole dessiné par l'objet (B) est différent entre la première opération de toucher et la seconde opération de toucher.

4. La machine de moulage par injection (10) selon la revendication 3,
dans laquelle l'écran (20) du panneau tactile (770) inclut une unité de confirmation (27), sur laquelle une opération de toucher visant à confirmer le symbole est exécutée, à côté de l'unité d'opération (21) ; et
l'unité d'identification (712) n'identifie pas la première opération de toucher et la seconde opération de toucher jusqu'à ce que l'objet (B) touche l'unité de confirmation (27).

5. La machine de moulage par injection (10) selon la revendication 3 ou 4,
dans laquelle l'écran (20) du panneau tactile (770) inclut une unité d'effacement (28), sur laquelle une opération de toucher visant à effacer le symbole est exécutée, à côté de l'unité d'opération (21) ; et
lorsque l'objet (B) touche l'unité d'effacement (28), l'unité d'identification (712) invalide le symbole dessiné jusqu'à ce que l'objet (B) touche l'unité d'effacement (28).
